Europäisches Patentamt

European Patent Office

Office européen des brevets

(19)

(11) Veröffentlichungsnummer: **0 114 251**
**B1**

(12) EUROPÄISCHE PATENTSCHRIFT

(45) Veröffentlichungstag der Patentschrift:
07.01.87

(51) Int. Cl.⁴: **G 01 B 3/00**

(21) Anmeldenummer: 83111912.8

(22) Anmeldetag: 29.11.83

(54) **Längenmessvorrichtung.**

(30) Priorität: 22.01.83 DE 3302151

(43) Veröffentlichungstag der Anmeldung:
01.08.84 Patentblatt 84/31

(45) Bekanntmachung des Hinweises auf die Patenterteilung:
07.01.87 Patentblatt 87/2

(84) Benannte Vertragsstaaten:
AT CH DE FR GB IT LI NL SE

(56) Entgegenhaltungen:
DE - C - 2 712 421
US - A - 3 816 002

(73) Patentinhaber: Dr. Johannes Heidenhain GmbH,
Nansenstrasse 17, D-8225 Traunreut (DE)

(72) Erfinder: Holstein, Siegbert, Ing. grad.,
Hochfellnstrasse 5, D-8221 Stein a.d. Traun (DE)

# Beschreibung

Die Erfindung bezieht sich auf eine Längenmessvorrichtung gemäss dem Oberbegriff des Anspruchs 1.

Aus einer Vielzahl von Druckschriften sind Längenmessvorrichtungen bekannt. In der DE-PS 2712421 und in der US-PS 3816002 sind beispielsweise Längenmessvorrichtungen beschrieben, bei denen die Massverkörperung durch ein flexibles Band realisiert ist, auf das eine Messteilung aufgebracht wurde. In der DE-PS 2712421 ist beschrieben, dass das Band in einer Nut im Massstabträgerkörper geführt und mit Befestigungselementen an einem der zu messenden Objekte (Maschinenschlitten) befestigt ist.

Bei der in der US-PS 3816002 gezeigten Vorrichtung hängt das Massband zwischen zwei Einspannstellen und wird durch die Abtastbaueinheit hindurchgeführt. In beiden Fällen hält eine Spannvorrichtung das Band in Position.

Häufig werden derartige Längenmessvorrichtungen zur Messung von Relativverschiebungen eingesetzt, was deren Anbau an Maschinen-Bauteilen erfordert. Bei Werkzeugmaschinen treten während des Betriebes Störeinflüsse durch Temperaturänderungen und Verschmutzung auf.

Zur Verringerung der Temperatureinflüsse auf die Messgenauigkeit werden beispielsweise die vorbeschriebenen Spannvorrichtungen vorgesehen. Zum Schutz gegen Verschmutzungen werden die Messvorrichtungen beispielsweise in abgedichteten Hohlkörpern gekapselt.

Eine weitere Möglichkeit besteht im Anbau der Längenmessvorrichtung an geschützter Stelle der Werkzeugmaschine. Vollständiger Verschmutzungsschutz lässt sich mit vertretbarem Aufwand jedoch nicht erreichen, so dass hin und wieder eine Reinigung der empfindlichen Messvorrichtungen erforderlich ist. Derartige Reinigungen können im Rahmen der Gerätewartung durchgeführt werden.

Je nach Anbaulage der Längenmessvorrichtung an der Maschine und der Ausführung des Gehäuses treten mehr oder wenigr grosse Probleme bei der Demontage der Längenmessvorrichtung auf. So sei nur beispielhaft erwähnt, dass bei der Demontage des Gerätes nach der US-PS 3816002 das Gehäuse geöffnet, die Spannvorrichtung des Massbandes gelöst und dann der Abtastbaustein abgezogen werden muss. Die Montage erfolgt in umgekehrter Reihenfolge, wobei zusätzlich das Massband neu geeicht und justiert werden muss.

Der Erfindung liegt die Aufgabe zugrunde, eine Längenmessvorrichtung zu schaffen, die kostengünstig herstellbar, wenig störanfällig, wartungsfreundlich und robust ist.

Diese Aufgabe wird durch die kennzeichnenden Merkmale des Anspruches 1 gelöst.

Weitere Ausführungsformen sind Gegenstand von abhängigen Ansprüchen.

Die Vorteile der Erfindung liegen darin, dass die Messvorrichtung aus einfachen Grundbausteinen herstellbar ist, dass sie zu Wartungszwecken nicht demontiert werden muss; dass jede Neujustierung aus Wartungs- oder Reinigungsgründen entfallen kann, da der Abtastbaustein seitlich aus dem Trägerkörper herausnehmbar ist, ohne dass die Messverkörperung aus ihrer exakt festgelegten Position entfert werden muss.

Anhand eines Ausführungsbeispiels soll die Erfindung mit Hilfe der Zeichnungen noch näher erläutert werden.

Es zeigt:

Figur 1 eine schematische Längsansicht einer Längenmessvorrichtung und

Figur 2 ein Ende eines Trägerkörpers mit Befestigungsbaustein für eine Massverkörperung.

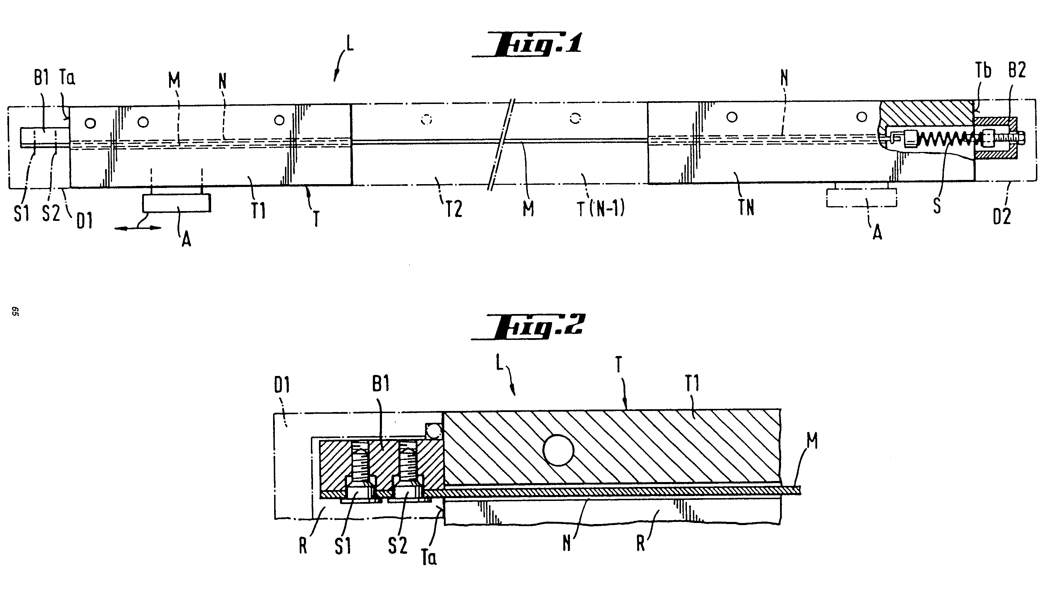

Die in Figur 1 schematisch dargestellte Längenmessvorrichtung L besteht aus einem mehrere Teilstücke T1, ..., TN umfassenden Trägerkörper T, der aus einem extrudierten Aluminium-Hohlprofil besteht und der in seinem Innenraum an einer seiner Innenflächen eine Nut N aufweist, in die eine bandförmige Massverkörperung M eingeschoben ist. Um die Massverkörperung M bei der Längenmessung abzutasten, ist ein Abtastbaustein A vorgesehen, der im Innenraum des Trägerkörpers T entlang der Massverkörperung M verschiebbar ist. Durch einen nicht näher bezeichneten, abgedichteten Längsschlitz im Trägerkörper T wird ein Teil des Abtastbausteines A herausgeführt. So kann der Abtastbaustein A an einem Maschinen-Bauteil und der Trägerkörper T am anderen Maschinen-Bauteil befestigt und deren Relativbewegung als Länge gemessen werden.

An den Enden Ta und Tb ist jeweils ein Befestigungsbaustein B1 bzw. B2 angeschraubt. Die in der Nut N des Trägerkörpers T lose eingeschobene Massverkörperung M wird am Befestigungsbaustein B1 mittels Schrauben S1 und S2 fixiert. Die Schrauben S1 und S2 haben einen besonders flachen Kopf, der kaum über die Massverkörperung M hinausragt. Bei geeigneter Materialauswahl kann die Fixierung auch anders, beispielsweise durch Punktschweissen erfolgen.

Durch die besondere Gestaltung des Befestigungsbausteines B1, durch die der innere Querschnitt der Messvorrichtung L von Vorsprüngen freigehalten wird, kann der Abtastbaustein A seitlich aus dem Trägerkörper-Hohlprofil T herausgezogen werden, ohne dass einer der Befestigungsbausteine B1 oder B2 demontiert werden muss. Durch diese Gestaltung des stirnseitigen Befestigungselementes B1 kann die Massverkörperung M in ihrer genau justierten Einbaulage verbleiben, auch wenn zu Wartungs- oder Reinigungszwecken der Abtastbaustein A aus der Messvorrichtung L entfernt wird.

Um die Massverkörperung M zu reinigen, kann ein Reinigungsbaustein anstelle des Abtastbausteines A in den Trägerkörper T eingeführt werden, die Justierung der Massverkörperung M wird davon nicht beeinflusst.

Der zweite Befestigungsbaustein B2 kann in herkömmlicher Weise ausgeführt werden und ist durch die einstellbare Spannvorrichtung in der Lage, Temperaturschwankungen auszugleichen und eventuelle Teilungs- und/oder Maschinenfehler zu kompensieren.

Das Hohlprofil des Trägerkörpers T wird durch einfache Deckel D1 und D2 stirnseitig verschlossen.

Die Erfindung ist nicht nur bei gekapselten Messvorrichtungen realisierbar, sondern auch sogenannte offene Messvorrichtungen können in besonders vorteilhafter Weise so ausgestaltet werden. Häufig werden offene Messvorrichtungen in extra dafür vorgesehene Aussparungen an den Maschinen-Bauteilen eingebaut. Das Wartungs- oder Reinigungsproblem ist dann ähnlich wie bei gekapselten Messvorrichtungen, so dass die Vorteile der Erfindung auch in diesen Fällen voll zum Tragen kommen.

**Patentansprüche**

1. Längenmessvorrichtung mit einer geringfügig längsverschieblichen, bandförmigen Massverkörperung und einem diese Massverkörperung in einer Längsnut aufnehmenden Trägerkörper, mit Befestigungsbausteinen für die Massverkörperung und den Trägerkörper, mit einem in Messrichtung verschiebbaren Abtastbaustein zum Abtasten der Massverkörperung und einem Auswertebaustein, dadurch gekennzeichnet, dass die Befestigungsbausteine (B1, B2) für die Massverkörperung (M) an den Enden (Ta, Tb) des Trägerkörpers (T) angeordnet sind und dass wenigstens einer der Befestigungsbausteine (B1) so gestaltet ist, dass der von dem Abtastbaustein (A) benötigte Abtastraum (R) frei von Vorsprüngen ist.

2. Längenmessvorrichtung nach Anspruch 1, dadurch gekennzeichnet, dass der Trägerkörper (T) ein Hohlprofil ist.

3. Längenmessvorrichtung nach den Ansprüchen 1 und 2, dadurch gekennzeichnet, dass wenigstens der eine Befestigungsbaustein (B1) so flach gestaltet ist, dass der innere Querschnitt des Hohlprofils (T) auch an seinem Ende frei von Vorsprüngen ist.

4. Längenmessvorrichtung nach Anspruch 1, dadurch gekennzeichnet, dass einer der Befestigungsbausteine (B2) für die Massverkörperung (M) eine Spannvorrichtung (S) enthält.

5. Längenmessvorrichtung nach Anspruch 4, dadurch gekennzeichnet, dass die Spannvorrichtungh (S) verstellbar ist.

6. Längenmessvorrichtung nach Anspruch 2, dadurch gekennzeichnet, dass das Hohlprofil (T) an seinen Enden (Ta, Tb) mittels Deckeln (D1, D2) verschliessbar ist.

7. Längenmessvorrichtung nach den Ansprüchen 1 und 2, dadurch gekennzeichnet, dass der Trägerkörper (T) aus mehreren aneinandergereihten Teilstücken (T1 ... TN) besteht.

8. Längenmessvorrichtung nach Anspruch 7, dadurch gekennzeichnet, dass die Befestigungsbausteine (B1 bzw. B2) jeweils an dem ersten und letzten Teilstück (T1 bzw. TN) des Trägerkörpers (T) angebracht sind.

9. Längenmessvorrichtung nach den Ansprüchen 7 und 8, dadurch gekennzeichnet, dass das erste und letzte Teilstück (T1 und TN) im Verhältnis zu den weiteren Teilstücken (T2 ... TN–1) und der Gesamtlänge der Längenmessvorrichtung (L) kurz sind.

**Claims**

1. Linear measuring device with a slightly longitudinally displaceable strip-shaped embodiment of a measure and a carrier body receiving this embodiment of a measure in a longitudinal groove, with fastening modules for the embodiment of the measure and the carrier body, with a scanning module, displaceable in the direction of measurement, for scanning the embodiment of a measure and an evaluation module, characterized in that the fastening modules (B1, B2) for the embodiment of a measure (M) are arranged at the ends (Ta, Tb) of the carrier body (T) and in that at least one of the fastening modules (B1) is designed such that the scanning space (R) required by the scanning module (A) is free from projections.

2. Linear measuring device according to claim 1, characterized in that the carrier body (T) is a hollow profile.

3. Linear measuring device according to claims 1 and 2, characterized in that at least one of the fastening modules (B1) is made flat such that the inner cross-section of the hollow profile (T) is also free from projections at its end.

4. Linear measuring device according to claim 1, characterized in that one of the fastening modules (B2) contains a clamping device (S) for the embodiment of a measure (M).

5. Linear measuring device according to claim 4, characterized in that the clamping device (S) is adjustable.

6. Linear measuring device according to claim 2, characterized in that the hollow profile (T) is closable by means of covers (D1, D2) at its ends (Ta, Tb).

7. Linear measuring device according to claims 1 and 2, characterized in that the carrier body (T) consists of several pieces (T1 ... TN) arranged in a row.

8. Linear measuring device according to claim 7, characterized in that the fastening modules (B1 or B2) are in each case attached on the first and last piece (T1 and TN, respectively) of the carrier body (T).

9. Linear measuring device according to claims 7 and 8, characterized in that the first and last pieces (T1 and TN) are short in relation to the other pieces (T2 ... TN–1) and the overall length of the linear measuring device (L).

**Revendications**

1. Dispositif de mesure de longueurs, doté d'un système s'échelle en forme de ruban légèrement déplaçable en translation longitudinale et d'un corps de support recevant ce système d'échelle dans une rainure longitudinale, de modules de fixation pour le système d'échelle et le corps de support, d'un module explorateur pour explorer le système d'échelle et d'un module évaluateur, caractérisé par le fait que les modules de fixation (B1, B2) du système d'échelle (M) sont disposés aux extrémités (Ta, Tb) du corps de support (T) et au moins l'un d'eux (B1) est ainsi établi que l'espace d'exploration (R) nécessaire au module explorateur (A) est exempt de saillies.

2. Dispositif de mesure de longueurs selon la revendication 1 caractérisé par le fait que le corps de support (T) est un profilé creux.

3. Dispositif de mesure de longueurs selon les revendication 1 et 2 caractérisé par le fait qu'au moins un module de fixation (B1) est assez aplati pour que la section intérieure du profilé creux (T) soit exempte de saillies même à son extrémité.

4. Dispositif de mesure de longueurs selon la revendication 1 caractérisé par le fait qu'un des modules de fixation (B2) renferme un dispositif tendeur pour le système d'échelle.

5. Dispositif de mesure de longueurs selon la revendication 4 caractérisé par le fait que le dispositif tendeur (S) est réglable.

6. Dispositif de mesure de longueurs selon la revendication 2 caractérisé par le fait que le profilé creux (T) est fermable à ses extrémités (Ta, Tb) par des couvercles (D1, D2).

7. Dispositif de mesure de longueurs selon les revendications 1 et 2 caractérisé par le fait que le corps de support (T) se compose de plusieurs éléments (T1 ... TN) alignés entre eux.

8. Dispositif de mesure de longueurs selon la revendication 7 caractérisé par le fait que les modules de fixation (B1, B2) sont chaque fois placés sur les premier et dernier éléments (T1, T2) du corps de support (T).

9. Dispositif de mesure de longueurs selon les revendications 7 et 8 caractérisé par le fait que le premier et le deuxième éléments sont courts par rapport aux autres éléments (T2 ... TN−1) et à la longueur totale du dispositif de mesure de longueurs (L).

Fig.1

Fig.2